# EUROPEAN PATENT APPLICATION

(11) **EP 1 634 754 A1**
(43) Date of publication of application: **15.03.2006**
(21) Application number: 05019302.8
(22) Date of filing: 06.09.2005
(51) Int. Cl.: B60K 7/00, B60T 1/06, F16D 55/226, F16D 65/14

(54) **Drive assembly for actuating wheels of vehicles, particularly carriages for handling and conveying materials**

(30) Priority: 14.09.2004 IT MO20040230
(71) Applicant: Comer Industries S.p.A., 42046 Villanova di Reggiolo (Reggio Emilia) (IT)
(72) Inventor: Massaccesi, Gianni, 35010 Vigodarzere (PD) (IT); Prospero, Roberto, 37129 Verona (IT); Benedetti, Tiziano, 41100 Modena (IT)
(74) Representative: Alagem Modiano, Lara S.

(57) **Abstract**

A drive assembly for actuating wheels of vehicles, particularly carriages for handling and conveying materials, comprising a motor (2) having a substantially vertical driving shaft (3), a unit (4) for reducing the rotation rate of a driven shaft (5), which is substantially parallel to the driving shaft (3), with respect to the rotation rate of the driving shaft (3), and an angle drive (6), which is suitable to transmit the motion from the driven shaft (5) to a shaft (7) which is substantially perpendicular thereto for fixing a wheel (8) of a vehicle, and a braking device (9), which acts on the driving shaft (3) and is interposed between the motor (2) and the reduction unit (4).

## Description

The present invention relates to a drive assembly for actuating wheels of vehicles, particularly carriages for handling and conveying materials.

Drive assemblies for actuating the wheels of vehicles, particularly carriages for handling and conveying materials, provided with a vertical electric motor are known.

Known drive assemblies substantially comprise an electric motor, which has a vertical axis and is functionally associated with a speed reduction unit and with an angle drive, which is arranged downstream of the reduction unit along the motion input direction and is suitable to change the position of the rotation axis from vertical to horizontal in order to transmit the motion to the fixing (keying) shaft of a wheel.

The input gear of the reduction unit is keyed on the output of the shaft of the electric motor.

Known drive assemblies may also comprise a steering device.

In order to brake the carriages, it is known to extend the end of the shaft of the electric motor that lies opposite with respect to the end on which the input gear of the reduction unit is keyed, in order to mount thereat a braking device.

As an alternative, it is known to arrange braking devices that act on the other wheels (free wheels) of the carriage.

Drive assemblies are also known which comprise, instead of an electric motor, a hydraulic motor provided with a vertical axis; in this case, the only way to brake the carriage is to arrange braking devices that act on the other wheels (free wheels) of the carriage, since it is not possible to obtain an auxiliary output from the shaft of hydraulic motors.

These known types of drive assembly are not free from drawbacks, including the fact that in order to be able to brake the vehicle to which they are applied it is necessary to have braking devices that act on the other wheels (free wheels) of said vehicle, or, if they use electric motors, it is necessary to extend the shaft of said motors in order to be able to arrange thereon an appropriately provided braking device, with consequent structural and constructive complications.

The aim of the present invention is to eliminate the drawbacks mentioned above of known drive assemblies, by providing a drive assembly for driving wheels of vehicles, particularly carriages for handling and conveying materials, which allows to brake the vehicle on which it is applied simply, without acting on the other wheels (free wheels) of said vehicle and without the need, if electric motors are used, for constructive complications for the extension of their driving shaft.

Within this aim, an object of the present invention is to provide a drive assembly that is simple, relatively easy to provide in practice, safe in use, effective in operation, and has a relatively low cost.

This aim and this and other objects that will become better apparent hereinafter are achieved by the present drive assembly for actuating wheels of vehicles, particularly carriages for handling and conveying materials, which comprises motor means having a substantially vertical driving shaft, a unit for reducing the rotation rate of a driven shaft, which is substantially parallel to said driving shaft, with respect to the rotation rate of said driving shaft, and an angle drive, which is suitable to transmit the motion from said driven shaft to a shaft which is substantially perpendicular thereto for fixing a wheel of a vehicle, particularly a carriage for handling and conveying materials, characterized in that it comprises a braking device, which acts on said driving shaft and is interposed between said motor means and said reduction unit.

Further characteristics and advantages of the present invention will become better apparent from the following detailed description of a preferred but not exclusive embodiment of a drive assembly for actuating wheels of vehicles, particularly carriages for handling and conveying materials, illustrated by way of non-limiting example in the accompanying drawings, wherein:
Figure 1 is a schematic sectional view of a drive assembly according to the invention;
Figure 2 is a schematic enlarged-scale sectional view of the braking device of the drive assembly according to the invention;
Figure 3 is a schematic enlarged-scale sectional view of a detail of the braking device of Figure 1;
Figure 4 is a schematic enlarged-scale sectional view of a detail of the braking device of Figure 1 in the configuration for mechanical release of the presser means.

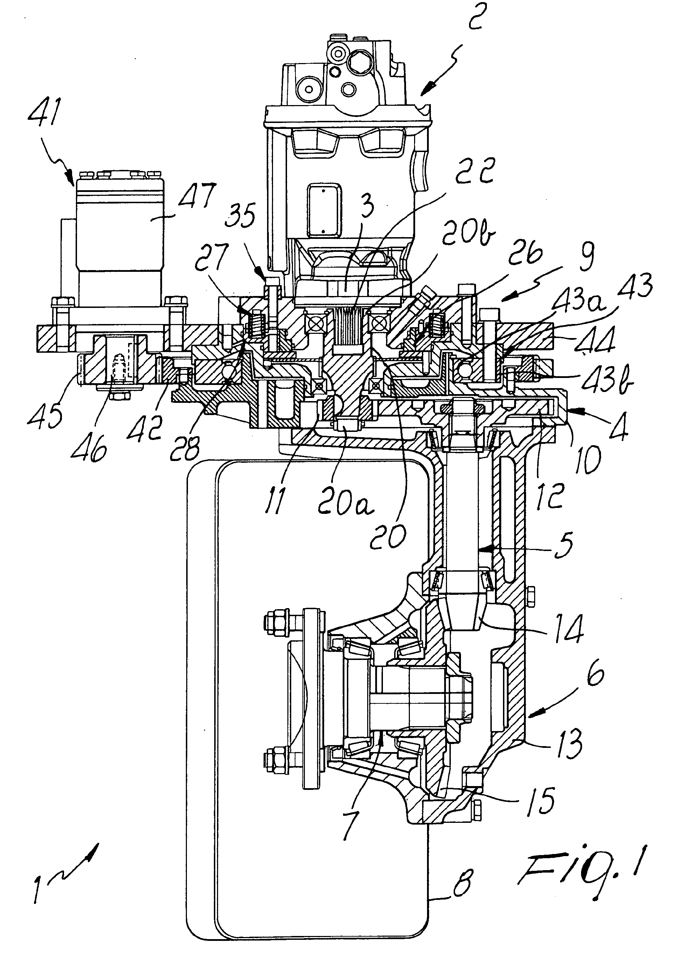

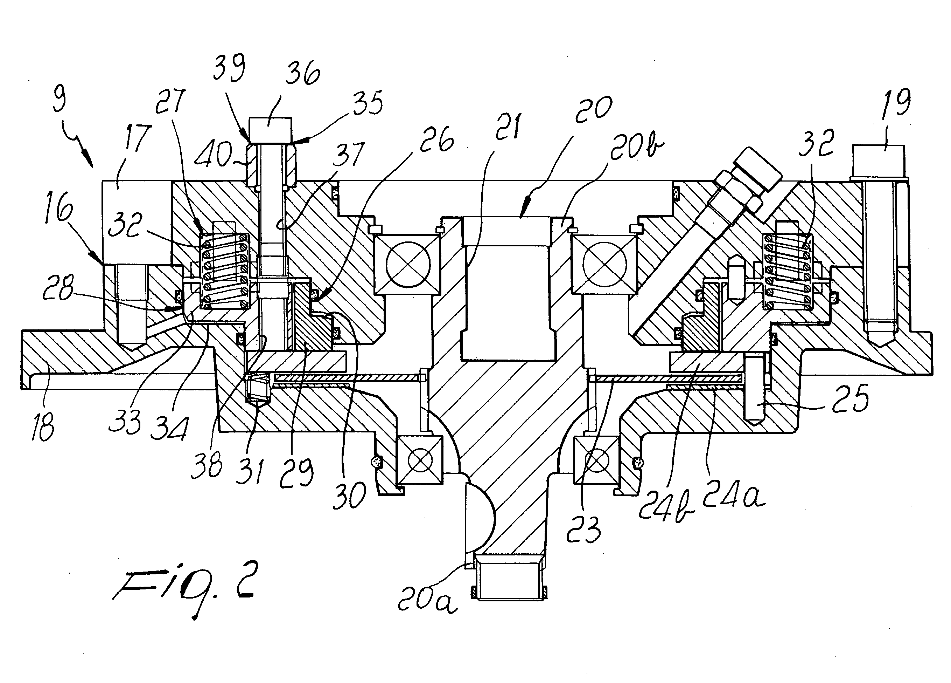

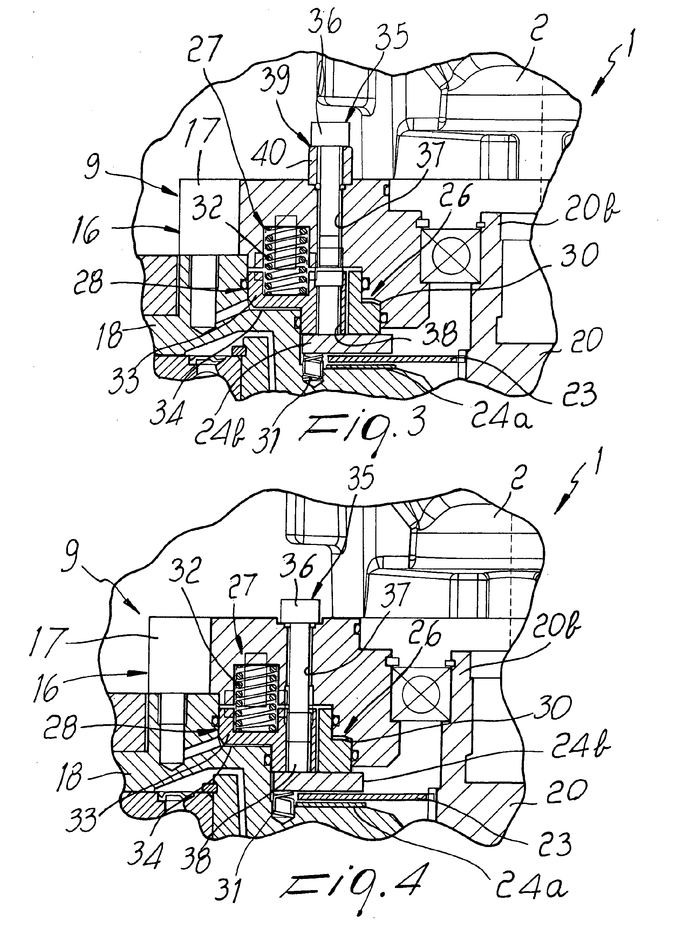

With reference to the figures, the reference numeral 1 generally designates a drive assembly for actuating wheels of vehicles, particularly carriages for handling moving and conveying materials.

The assembly 1 comprises motor means 2, which are arranged so that a driving shaft 3 is substantially vertical; a unit 4 for reducing the rotation rate of a driven shaft 5, which is parallel to the driving shaft 3, with respect to the rotation rate of said driving shaft; and an angle drive 6, which is suitable to transmit the motion from the driven shaft 5 to a fixing shaft 7 of a wheel 8 and is substantially perpendicular thereto.

The assembly 1 further comprises a braking device 9, which acts on the driving shaft 3 and is interposed between the motor means 2 and the reduction unit 4.

The reduction unit 4 is for example of the type of an ordinary single-stage gear system, and comprises a containment box 10, inside which an input gear 11 is accommodated which engages an output gear 12 keyed to the driven shaft 5.

The angle drive 6 comprises a box-like enclosure 13, which is rigidly coupled to the containment box 10 and rotatably supports the driven shaft 5 and the fixing shaft 7, between which motion is transmitted by means of two bevel gears 14 and 15.

The braking device 9 comprises a separate containment body 16, i.e., an independent and autonomous body, which can be interposed between the motor means 2 and the containment box 10 of the reduction unit 4.

The containment body 16 is formed by two plates: an upper plate 17 and a lower plate 18, which can be mutually superimposed and are rigidly coupled to each other by threaded means 19.

A pivot 20 is supported rotatably within the containment body 16 and has a first end 20a, which is provided with means for keying the input gear 11 of the reduction unit 4, and a second end 20b, which is opposite with respect to the first one and can be rigidly rotationally associated with the driving shaft 3.

The second end 20b comprises, in particular, respective keying means, such as for example internal slotted profiles 21, with which the driving shaft 3 engages and on which corresponding external slotted profiles 22 are provided.

The braking device 9 is of the type having one or more oil-bath discs and acts both as a service brake and as a parking brake; it comprises a brake disc 23, which rotates rigidly or jointly with the pivot 20 but can slide axially with respect to it and is interposed between two complementary braking discs: a fixed complementary disc 24a, which is rigidly coupled to the internal surface of the lower plate 18, and a sliding complementary disc 24b, which is associated with the internal walls of the containment body 16, so that it can slide in a direction that is substantially parallel to the pivot 20.

The rotation of both the fixed complementary disc 24a and of the sliding complementary disc 24b is prevented by pins 25 or other equivalent means.

Furthermore, there are fluid-operated means 26 for actuating the sliding of the sliding complementary disc 24b which are suitable to activate, modulate and deactivate the braking action in service conditions (service brake).

Furthermore, the braking device 9 comprises presser means 27 for pressing the complementary discs 24a and 24b against the brake disc 23, which are suitable to keep them in mutual contact in order to lock the rotation of the pivot 20 in conditions for stopping the motor means 2, and fluid-operated deactivation means 28 for deactivating the presser means 27, which are suitable to release them, thus allowing the free rotation of the pivot 20 when the motor means 2 move (negative parking brake).

The actuation means 26 comprise a first piston 29 (of the annular single-acting type), which acts on the sliding complementary disc 24b and forms, in cooperation with the upper plate 17 of the containment body 16, a first chamber 30, which is connected to a source of a pressurized fluid, not shown, and elastic contrast means, which are constituted by first springs 31 which act, by means of the sliding complementary disc 24b, between the first piston 29 and the lower plate 18. The first springs 31 keep the sliding complementary disc 24b raised so that it does not touch the brake disc 23, while the oil introduced in the first chamber 30, by overcoming the contrast of the first springs 31, pushes the first piston 29 toward the sliding complementary disc 24b in order to press it into contact with the brake disc 23.

The presser means 27 are constituted by an elastic pusher means, such as second springs 32, which are interposed and act between the upper plate 17 and the sliding complementary disc 24b and also through the brake disc 23 on the disc 24a; the deactivation means 28 are interposed between the second springs 32 and the sliding complementary disc 24b.

The deactivation means comprise a second piston 33 (which is annular and of the single-acting type), on the upper face of which the second springs 32 act and the lower face of which forms, in collaboration with the lower plate 18, a second chamber 34, which is connected to a source of pressurized fluid, not shown.

The second springs 32 push the second piston 33 against the sliding complementary disc 24b, keeping it pressed against the brake disc 23 and thus locking the rotation of the pivot 20; the oil introduced in the second chamber 34, by overcoming the action of the second springs 32, moves the second piston 33 away from the sliding complementary disc 24b, which, pushed by the first springs 31, moves away from the brake disc 23, thus allowing the free rotation of the pivot 20.

Finally, the braking device 9 comprises release means 35 for mechanically releasing the presser means 27, which allow to release mechanically the negative parking brake and therefore to move the vehicle if the hydraulic release system fails.

In the illustrated embodiment, the mechanical release means 35 comprise one or more actuation screws 36, each of which is coupled to a corresponding female thread 37 formed, substantially at right angles to the second piston 33, in the upper plate 17, and can engage a corresponding threaded hole 38 formed, substantially coaxially thereto, in the second piston 33, retention means 39 being provided for temporarily retaining the actuation screws 36 in the configuration for disengagement from the respective threaded holes 38.

The temporary retention means 39 comprise a removable spacer, such as a bush 40, which is interposed between the head of the actuation screw 36 and the upper surface of the upper plate 17.

Mechanical release occurs by disengaging the actuation screws 36 from their female threads 37 in order to remove the corresponding bushes 40 and by screwing the actuation screws 36 into their female threads 37 and the threaded holes 38, thus moving the second piston 33 away from the sliding complementary disc 24b.

However, alternative embodiments of the mechanical release means 35 are not excluded.

The motor means 2 can be of the hydraulic or electric type.

Finally, the assembly 1 is provided with a known type of steering device 41, which substantially comprises a ring gear 42a with external teeth, which rotates rigidly with the containment box 10 of the reduction unit 4, which is rigidly coupled to the internal ring 43a of a bearing 43, the outer ring 43b of which is fixed to a supporting plate 44.

The ring gear 42 meshes with a gear 45, which is keyed to the output shaft 46 of second motor means 47, which are supported by the supporting plate 44.

However, alternative embodiments of the steering device 41 are not excluded.

In practice it has been found that the described invention achieves the proposed aim and object.

In particular, it is noted that the braking device of the drive assembly according to the invention, by being accommodated in its own separate containment body, can be removed and replaced simply and rapidly.

Moreover, the drive assembly according to the invention, by using a single output of the motor means both for motion transmission and for the braking action, allows to adopt motor means of the hydraulic type, which notoriously have a single output shaft.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02004A000230 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A drive assembly for actuating wheels of vehicles, particularly carriages for handling and conveying materials, comprising motor means (2) having a substantially vertical driving shaft (3), a unit (4) for reducing the rotation rate of a driven shaft (5), which is substantially parallel to said driving shaft (3), with respect to the rotation rate of said driving shaft (3), and an angle drive (6), which is suitable to transmit the motion from said driven shaft (5) to a fixing shaft (7) which is substantially perpendicular thereto for fixing a wheel (8) of a vehicle, particularly a carriage for handling and conveying materials, **characterized in that** it comprises a braking device (9), which acts on said driving shaft (3) and is interposed between said motor means (2) and said reduction unit (4).

2. The assembly according to claim 1, **characterized in that** it comprises a separate containment body (16) for containing said braking device (9), which can be interposed between said motor means (2) and the containment box (10) of said reduction unit (4).

3. The assembly according to one or more of the preceding claims, **characterized in that** said braking device (9) is of the type with at least one oil-bath disc.

4. The assembly according to one or more of the preceding claims, **characterized in that** said braking device (9) comprises a pivot (20), which is supported rotatably within said body (16) and has an end (20a) which can be associated with the input gear (11) of said reduction unit (4) and an opposite end (20b) which can be associated with said driving shaft (3), a brake disc (23) which rotates rigidly with said pivot (20) and can slide axially with respect to it and is interposed between complementary braking discs (24a, 24b), at least one of which is associated, so that it can slide substantially parallel to said pivot (20), with the internal walls of said body (16), and means (26) for actuating the sliding of said at least one complementary disc (24b).

5. The assembly according to one or more of the preceding claims, **characterized in that** said pivot (20) has, at said end (20a) and at said opposite end (20b), respective keying means (21, 22), respectively for said input gear (11) and for said driving shaft (3).

6. The assembly according to one or more of the preceding claims, **characterized in that** said braking device (9) comprises means (27) for pressing said complementary discs (24a, 24b) against said brake disc (23), which are suitable to lock said pivot (20) in conditions for stopping said motor means (2).

7. The assembly according to one or more of the preceding claims, **characterized in that** said braking device (9) comprises means (28) for deactivating said presser means (27).

8. The assembly according to one or more of the preceding claims, **characterized in that** at least one of said actuation means (26) and said deactivation means (28) is of the fluid-operated type.

9. The assembly according to one or more of the preceding claims, **characterized in that** said actuation means (26) comprise a first piston (29), which acts on said sliding complementary disc (24a, 24b) and forms, in collaboration with said body (16), a first chamber (30) connected to a source of a pressurized fluid, and elastic contrast means (31), which act between said first piston (29) and said body (10).

10. The assembly according to one or more of the preceding claims, **characterized in that** said presser means (27) comprise elastic pusher means (32), which are interposed between said body (16) and said brake disc (23) and said complementary discs (24a, 24b).

11. The assembly according to one or more of the preceding claims, **characterized in that** said deactivation means (28) comprise a second piston (33), which is interposed between said elastic pusher means (32) and said brake disc (23) and complementary discs (24a, 24b) and forms, in collaboration with said body (16), a second chamber (34), which is connected to a source of a pressurized fluid.

12. The assembly according to one or more of the preceding claims, **characterized in that** said braking device (9) comprises means (35) for mechanically releasing said presser means (27).

13. The assembly according to one or more of the preceding claims, **characterized in that** said mechanical release means (35) comprise at least one actuation screw (36), which is coupled to a corresponding female thread (37) formed in said body (16) substantially at right angles to said second piston (33) and can engage in a corresponding threaded hole (38) which is formed, substantially coaxially thereto, in said second piston (33), means (39) being provided for temporarily retaining said screw (36) in the configuration for disengagement with respect to said threaded hole (38).

14. The assembly according to one or more of the preceding claims, **characterized in that** said temporary retention means (39) comprise a removable spacer (40), which is interposed between the head of said screw (36) and said body (16).

15. The assembly according to one or more of the preceding claims, **characterized in that** said spacer comprises a bush (40).

16. The assembly according to one or more of the preceding claims, **characterized in that** said motor means (2) are of the hydraulic type.

17. The assembly according to one or more of the preceding claims, **characterized in that** said motor means (2) are of the electric type.

18. The assembly according to one or more of the preceding claims, **characterized in that** said body (16) comprises two plates (17, 18), which can be mutually superimposed and rigidly associated.
